(19) Europäisches Patentamt

European Patent Office

Office européen des brevets

(11) Publication number: **0 577 914 A1**

## (12) EUROPEAN PATENT APPLICATION

(21) Application number: **92870100.2**

(22) Date of filing: **08.07.92**

(51) Int. Cl.5: **A01N 57/20**, A01N 25/30,
//(A01N57/20,37:02,25:30,25:14,
25:06,25:02)

(43) Date of publication of application:
**12.01.94 Bulletin 94/02**

(84) Designated Contracting States:
**AT BE CH DE DK ES FR GB GR IT LI LU MC NL PT SE**

(71) Applicant: **MONSANTO EUROPE S.A.**
**Avenue de Tervuren 270-272**
**Letter Box 21**
**B-1150 Brussels(BE)**

(72) Inventor: **Khan, Shuaib Ahmad**
**Rue des Pêcheries 74**
**B-1160 Brussels(DE)**
Inventor: **Bonnet, Marc René Edouard**
**Rue des Charmilles 22**
**B-4000 Liege(BE)**

(74) Representative: **Bosch, Henry et al**
**Monsanto Services International S.A.**
**Patent Department**
**Avenue de Tervuren 270/272**
**Letter Box No. 21**
**B-1150 Brussels (BE)**

(54) **Improved glyphosate compositions and their use.**

(57) The present invention relates to an improved glyphosate composition comprising :
- a glyphosate herbicide
- a surfactant component in the weight ratio of glyphosate to surfactant of from 1:5 to 10:5, and
- a monocarboxylic fatty acid selected from saturated C8-C14 monocarboxylic fatty acids or salts thereof, in the weight ratio of glyphosate herbicide to fatty acid of from 30/1 to 10/1.

EP 0 577 914 A1

The present invention relates to new herbicidally effective glyphosate compositions that show improved characteristics. According to a different aspect, the invention also relates to the use of said compositions to kill or control weeds or plants.

Glyphosate (N-phosphomethylglycine) is a well known effective herbicide generally applied in combination with one or more surfactants.

Numerous studies have been made on the effect of surfactants on the herbicidal action of glyphosate. Wyrill and Burnside, Weed Science, Vol. 25 (1977), 275-287, studied the effect of many different surfactants including examples from different classes of surfactants on the herbicidal efficacy of glyphosate. Some classes of surfactant were more effective than others in enhancing the herbicidal effect of glyphosate (used as a solution of the isopropylamine salt). Present commercially sold glyphosate formulations containing a surfactant are acceptably safe herbicidal formulations from the point of view of toxicity and environmental acceptability and further environmentally improved herbicidal glyphosate compositions are under development. The level of toxicity or irritancy which is shown in certain situations, however, is essentially due to the presence of surfactant and not due to the glyphosate herbicide itself.

There is thus a need to provide glyphosate compositions improved in such a way that less herbicidal composition has to be used to reach the same bio-efficacy or that less surfactant may be used in the herbicidal composition whilst the overall activity is essentially maintained, thus reducing the amount of component which is less environmentally friendly.

Another disadvantage of known glyphosate compositions consists in that they tend to produce foam when agitated e.g. in a spray tank. It is therefore often advisable to use a defoamer either formulated in the commercial product or added in the spray tank.

Some fatty acids or salts thereof are known to be environmentally friendly agricultural products.

Sharpshooter(TM) Herbicide Concentrate from Safer, Inc. is said to contain fatty acid(s) as active ingredients such as those having 8 to 12 carbon atoms and mixtures thereof and is said to be used as a vegetation suppression agent. SharpShooter(TM) is non- selective, and shows the result of its contact with weeds and unwanted vegetation in the form of necrosis, leaf burn, desiccation, wilting and the like. Typical fatty acids known to produce such symptoms are pelargonic and n-capric acid.

PCT/US88/03582 (WO89/03178) of Safer, Inc. discloses a herbicidal composition and method for non-selectively controlling and retarding the growth rate and, if desired, causing extensive mortality of unwanted vegetation. The compositions consist essentially of one or more substances selected from the group consisting of aliphatic acids or their herbicidally active salts, disclosed preferably as octanoic acid, nonanoic acid, decanoic acid, n-decanoic acid, or dodecanoic acid, and an ammonium compound, preferably ammonium nitrate, sulfate or sulfamate. The composition is said to cause a plant mortality significantly in excess of the expected additive mortalities of the individual components.

W0 91/05471 in the name of Safer, Inc. discloses an environmentally compatible herbicidal composition, consisting essentially of a herbicidally effective amount of a saturated linear monocarboxylic (C8-C12) fatty acid, such as caprylic, pelargonic, capric, undecanoic, lauric acid and mixtures thereof; and a surfactant component, such as a quarternary ammonium salt, esters of sorbitol, etc... Examples are Ethoquad; Arquad; Tween 80.

W0 91/05472 in the name of Safer, Inc. discloses a herbicidal emulsifiable composition comprising a herbicidally active mono- carboxylic (C8-C12) fatty acid, an emulsifier component and an oil component. The emulsifier can be Tween 80.

U.S. Patent 4,134,754 issued to Otto L. Hoffmann on January 16, 1979 discloses that the activity of barban is enhanced and variation of selectivity with climatic conditions is alleviated by applying to wild oats an effective amount of a composition comprising one part by weight barban and at least four parts by weight of a poly-unsaturated fatty acid exemplified by linolenic acid. The composition is preferably either dispersed in water with the aid of an emulsifier or dissolved in a mixture of water and a volatile organic solvent such as acetone.

U.S. Patent 4,436,547 issued to Michael J. Sampson on March 13, 1984 discloses that the effect of fungicides, herbicides e.g; glyphosate, insecticides, nematocides and plant-growth regulators, is improved by co-administration of them with one or more of the following additives: carbohydrates, organic acids (particularly fatty acids and acids of the Krebs tricarboxylic acid cycle), vitamins and co-enzymes, purine and pyrimidine nucleosides and nucleotides, naturally occurring fats and oils e.g. lauric, palmitic, stearic, oleic and linoleic acid, certain amino acids and (but not where the agricultural chemical is itself a plant-growth regulator) plant-growth regulators. The invention is said to provide compositions containing one or more of the said agricultural chemicals and one or more of the said additives and methods of improving the harvest of a given crop by applying to it one or more of the said agricultural chemicals and one or more of the additives, either simultaneously or within up to about ten days of one another. The example (Experiment 7) relating to the glyphosate herbicide seems to indicate that the addition of an organic acid (citric acid) does not substantially improve a commercial glyphosate formulation.

WO 89/10693 (Safer, Inc) discloses arthropodicidal solutions for application to plants, comprising an arthropodically active mono alpha carboxylic acid of 8 to 20 C-atoms and/or monovalent metal salts thereof, and possibly metal ions, sequesting agents, chelating agents and/or surfactants.

U.S. Patent 4 626 274 issued to Heinz Hausmann on December 2, 1986 discloses that a known herbicide such as a urea, a carboxylic acid ester, an aminoacid (such as glyphosate), a benzoic derivative, a benzo-nitrile, a phenol derivative, a diphenyl ether, a triazinone, a triazinedione, a heterocycle, a dipyridyl derivative or benzosulphonamide, is rendered more effective by being combined with a synthetic spreading agent such as silicone oil, a fatty acid ester or a fatty alcohol. Examples of such synthetic spreading agents are : ethyl stearate, di-n-butyl adipate, hexyl laurate, dipropylene glycol pelargonate, esters of a branched fatty acid of medium chain length and saturated C16-C18 fatty alcohols, isopropyl myristate, isopropyl palmitate, caprylic/capric acid esters of saturated fatty alcohols of C12-C18 chain lengths, isopropyl stearate, oleyl oleate, decyl oleate, ethyl oleate, ethyl lactate, dibutyl phthalate and diisopropyl adipate, related ester mixtures and the like. Examples of fatty alcohols which may be mentioned are, for example : isotridecyl alcohol, 2-octyldode- canol, cetyl-stearyl alcohol and oleyl alcohol. The following are particularly preferred : isopropyl myristate and isopropyl palmitate.

U.S. Patent 4 966 728 issued to James L. Hazen, on October 30, 1990 discloses herbicide adjuvants which are said to enhance the effectiveness of a broad spectrum of postemergent herbicides, such as cyclohexanone type herbicides. These adjuvants preferably contain a low foaming nonionic surfactant, such as alkoxylated long chain fatty alcohols, an anionic surfactant such as partial sulfate and phosphate ester of polyoxyalkylene ethers, a lower alkanol ester of a fatty acid, and a hydrocarbon oil component.

U.S. Patent 4 902 334 issued to Azuma et al on February 20, 1990 discloses a plant metabolism regulating agent comprising as an active ingredient an alpha, beta or beta, gamma-unsaturated carboxylic acid or its derivative. This concept is said to be useful for controlling the metabolism of a plant, facilitating the growth of a beneficial plant such as cereals by inhibiting the growth of undesirable plants or eradicating them, regulating the growth of a plant and dwarfing a plant.

U.S. Patent 4 904 645 issued to George S. Puritch et al on February 27, 1990 discloses a combination of pyrethrum and fatty acid salt material which is said to provide a stable, commercially useful and environmentally safe pesticidal formulation. The specific composition comprises an aqueous solution having a pH within the range of 7.5 to 8.8; an aqueous solution comprising about 50% by weight of mono-carboxylic acids or their alkali metal salts, where the acid mixture is at least 70% oleic acid and 6% linoleic acid; a pyrethrum extract; a solvent for the pyrethrum, which is preferably a 2-6 carbon alcohol; a trace amount of an antioxidant. The composition is said to be effective against insects of at least the orders Homoptera, Coleoptera, Dermaptera, Hemiptera and Lepidoptera, and against crustacea of the order Isopoda.

U.S. Patent 3 985 541 discloses plant growth regulators consisting of fatty acid polyoxyethylene glycol ester mixtures obtained by ethoxylating C6-C12 fatty acids with from 4 to 8 moles of ethylene oxide per mole of fatty acid.

U.S. Patent 4 398 937 discloses that blue-green algae can be effectively controlled by use of low concentrations of branched or unbranched C12-C20 fatty acids. Examples are given of dihydroxy stearic acid, linoleic acid, dodecanoic acid and ricinoleic acid at concentrations of 0.5 to 15 ppm.

U.S. Patent 2 626 862 discloses that undecylenic acid and halogenated undecylenic acid, their salts, esters, amides and corresponding aldehydes which oxidize readily to such acids have pronounced herbicidal properties. Said compounds may be dispersed in water with suitable solubilizers and emulsifiers.

In U.S. 3 645 716 neodecanoic acid, preferably formulated with a suitable solvent and suitable emulsifier such as alkylated aryl polyether alcohol or a blend of anionic and nonionic emulsifiers, is said to be a postemergent herbicide. Said reference also recites older prior art according to which carboxylic acid derivatives have been shown to be biologically active as herbicides. - U.S. 1 243 987, for instance, is cognizant of the fact that hindered highly branched aliphatic carboxylic acids having 5-15 C-atoms have herbicidal, preferably postemergent, activity.

U.S. 4 557 751 discloses herbicidal compositions containing broadleaf foliar herbicide and condensate of about 2 to 40 moles of ethylene oxyde with one mole of a C12-C18 unsaturated fatty acid, C12-C18 unsaturated fatty amine, C12-C18 unsaturated fatty amide or C12-C18 unsaturated fatty alcohol.

WO 91/18508 (Sostra S.R.L.) discloses a composition against ozone damages to cultivations which is based on natural unsaturated fatty acids, salts or esters thereof, possibly with the addition of antioxidants, chelating agents for heavy metals, emulsifiers, surfactants or inerts.

It has now been found, that the combination of low amounts of certain fatty acids with glyphosate herbicide increases the herbicidal activity of the glyphosate herbicide, without negative impact on other advantageous properties of current glyphosate formulations with regard to final control, sensitivity of certain types or classes of plants .

According to the present invention the improved herbicidal glyphosate composition comprises :
- a glyphosate herbicide,
- a surfactant component in the weight ratio of glyphosate to surfactant of from 1:5 to 10:5, and
- a monocarboxylic fatty acid selected from saturated $C_8$ - $C_{14}$ monocarboxylic fatty acids or salts thereof or mixtures thereof, in the weight ratio of glyphosate herbicide to fatty acid of from 30/1 to 10/1.

Herein, the term "glyphosate herbicide" means N-phosphonomethylglycine (glyphosate) and any form or derivative of glyphosate which in aqueous solution provides glyphosate anions. Suitable cations may also be present. Examples of such suitable cations are alkali metal cations, for instance sodium and potassium, and ammonium cations. The latter include cations derived from primary or secondary amines such as isopropylamine or dimethylamine, and from diamines such as ethylenediamine. Especially preferred as a glyphosate herbicide are water soluble salts of glyphosate such as the isopropylamine salt of glyphosate and the trimethylsulfonium salt of glyphosate. US Patent 3,799,758 discloses salts of glyphosate useful herein. Other examples of agriculturally acceptable salts of glyphosate are the sulfonylamine salt and aminoguanidine salts as disclosed in EP-A-0 088 180. Because glyphosate has more than one replaceable hydrogen atom, mono-and dialkali metal salts are possible, as well as mixtures of such salts.

Herein surfactant component means a surfactant, selected from the range of anionic, nonionic and cationic surfactants available and well-known to those skilled in the art, preferably cationic and nonionic surfactants or mixtures thereof. A suitable list of such surfactants may be found in "McCutcheon's Emulsifiers and Detergents".

Preferable surfactants include, but are not limited to:
- amines, such as ethoxylated alkyl amines, particularly tallow amines, cocoamines, surfactants sold under the tradename Ethomeen, or Ethoduomeen, amine oxides, such as surfactants sold under the trade name Empigen OB;
- quaternary ammonium salts, such as ethoxylated and/or propoxylated quaternary ammonium salts, more particularly surfactants sold under the trade names Ethoquad, Emcol CC, Dodigen; quaternary ammonium salts as disclosed in British Patent Application 90 02495.1;
- alkylpolyglycoside or alkylglycoside, glucose or sucrose esters, like surfactants from the Crodesta F series; sucroglycerides;
- phosphate ester type of surfactants;
- sulfosuccinate type of surfactants;
- ethylenoxide - propylenoxide block co-polymer surfactants;
- sorbitan fatty acid esters, optionally ethoxylated and/or propoxylated;
- silicon polymer type of surfactants;
- acetylenic diol type of surfactants;

In the compositions of this invention, the weight ratio of glyphosate (expressed as glyphosate acid equivalent) to the surfactant component can vary over a considerable range, for example from about 1:5 to about 10:1. The optimum ratio will vary according to the manner in which the herbicidal composition is applied, the weed species to be treated, and the particular surfactant component selected, but is normally within the range from about 1:2 to about 4:1, for example from about 1:1 to about 2:1.

Preferred saturated monocarboxylic acids are nonanoic, decanoic and lauric acid. Agriculturally acceptable salts thereof may also be used.

The composition according to the invention shows a very good herbicidal efficacy where the glyphosate herbicidal effect has been enhanced at a level superior to a corresponding composition that does not comprise the claimed fatty acids. The enhancement is particularly noticeable on broad leaved weeds.

It has also been discovered that the compositions according to the invention show a much lower tendency to foam than usual compositions. This advantage is of particular interest for liquid compositions, since the fatty acid here constitutes a solubilized defoamer, whilst currently used defoamers are solids suspended or dispersed in the aqueous solution of glyphosate herbicide, like silicon based defoamers. According to another embodiment of the invention, the low foam property may further be enhanced by addition of higher fatty acids or salts thereof or mixtures thereof, like $C_{16}$ - $C_{30}$ monocarboxylic acids.

A composition of the invention can be a liquid concentrate intended to be diluted with water to form a spray solution for the herbicidal application. A liquid concentrate will normally contain at least 50 grams glyphosate acid equivalent per litre, and preferably at least 100 g/l, but in certain cases, more diluted ready to use formulations may contain glyphosate concentrations of about 5 g/l.

Compositions of the invention may include a significant amount of an agriculturally-acceptable inorganic ammonium salt such as ammonium nitrate, ammonium thiocyanate, ammonium phosphate, ammonium chloride, preferably ammonium sulphate, in addition to the glyphosate herbicide and surface active component. Liquid concentrates without such an inorganic ammonium salt can contain up to 450 g/l or more, for example 300-450 g/l, glyphosate acid equivalent when the glyphosate is present as a salt having a high solubility, for example the isopropylamine salt. In liquid concentrates containing an inorganic ammonium salt (for example ammonium sulphate in an amount of from 100 to 500 g/l), the maximum amount of glyphosate which can be accommodated is less, and may be, for example, about 150 g/l glyphosate acid equivalent.

In another form, a composition of the invention is a solid, for example a free-flowing particulate, granular solid or compressed into tablets or briquettes of any desired size and shape. Such compositions will usually contain not more than 5% and preferably not more than 1% by weight of water. In a solid composition, the glyphosate is preferably present as an alkali metal salt such as a sodium or potassium salt, an alkali-earth metal salt or an ammonium salt, or as a mixture of those salts.

Solid compositions may be formulated to include a water-soluble inert carrier, and for this purpose ammonium sulphate is particularly suitable. The weight ratio of glyphosate (expressed as glyphosate acid equivalent) to surface active component in such compositions will be within the general range mentioned above. The amount of water-soluble inert carrier is not critical, and in the case of ammonium sulphate, the amount may, for example, range from 20% to 80% of the total weight of the composition. Solid compositions can be made, for example by spray drying an aqueous solution of the components, by dry-blending the ingredients in conventional granulating apparatus, or by extrusion blending whereby a granular product is obtained in an essentially single operation. In a preferred method, an alkali metal salt of glyphosate is prepared in situ by the method of European patent application 8790 1321.7. It has been found that by radial extrusion, a product with better dissolution characteristics in water can be obtained, compared to frontal extrusion.

Compositions of the invention also include spray solutions. In these solutions, the concentration of glyphosate is selected according to the volume per unit area of spray solution to be used and the desired rate of application of glyphosate per unit area. For example, conventional spraying is done at 100-600 litres of spray solution per hectare, and the rate of application of glyphosate is typically 0.125 to 3 kg of glyphosate acid equivalent per hectare. In controlled drop spraying, the rate of application of glyphosate per hectare will normally be within the same range, but the volume of spray solution per hectare will be considerably less, perhaps 15-50 litres per hectare. Spray solutions for controlled drop spraying are therefore more concentrated than those used in conventional spraying. In spray solutions containing inorganic ammonium salts in addition to the glyphosate and surface active component, the amount of inorganic ammonium salt which can be included may be, for example, up to 10 times the weight of glyphosate acid equivalent.

Spray solution compositions can be prepared by diluting liquid concentrates or dissolving solid compositions of this invention as described above, or by tank mixing the separate components of our compositions.

Still another embodiment pertaining to the present invention includes an adjuvant for agricultural compositions, comprising a surfactant component and a monocaboxylic fatty acid having 8 to 14 C-atoms, preferably in the weight ratio of from 90/10 to 10/90 and optionally a $C_{16}$ - $C_{30}$ saturated monocarboxylic acid or a mixture of different $C_{16}$ - $C_{30}$ monocarboxylic acids or salts thereof.

Compositions of the invention including the adjuvant can optionally contain other components. These additional components may include anti-freeze agents such as ethylene glycol, polyethylene glycols and glycerol. Other examples are dyes and thickening agents.

The concentrates and solutions of the invention may also be mixed with other herbicides. Preferably though not required such other herbicides, insecticides or fungicides have low irritancy and toxicity.

Examples :

Four liquid concentrated formulations were prepared using four different fatty acids and maintaining a ratio of glyphosate acid equivalent to surfactant component of 2 to 1. The surfactant component consists in a 80/20 blend of a polyalkoxylated quaternary ammonium surfactant and an ethoxylated sorbitan ester (Tween[20] - tradename of ICI). The respective fatty acid was first solubilized in the surfactant blend before adding the glyphosate herbicide and water.

The glyphosate herbicide used here is the isopropylamine salt of glyphosate (IPA salt). Lower amounts of dipropyleneglycol were added to obtain clear transparent formulations.

| FORMULATION N° | C₁ | 1 | 2 | 3 | 4 | C₂ |
|---|---|---|---|---|---|---|
| IPA-glyphosate | 41.00 | 41.00 | 41.00 | 41.00 | 41.00 | 41.00 |
| Surfactant | 15.50 | 15.50 | 15.50 | 15.50 | 15.50 | - |
| Octanoic acid | - | 2 | - | - | - | 2.00 |
| Nonanoic acid | - | - | 2 | - | - | - |
| Decanoic acid | - | - | - | 2 | - | - |
| Lauric acid | - | - | - | - | 2 | - |
| Compatibil. agent | - | 3 | 3 | 3 | 3 | 15.00 |
| Water | 43.50 | 38.50 | 38.50 | 38.50 | 38.50 | 42.00 |

C₁ is used as control; it does not contain fatty acid C₂ is used as control with fatty acid but without surfactant blend.

Formulation n°8 has been prepared according to the same procedure as described above and comprises 41 % by weight IPA-glyphosate, 9 % by weight Emcol CC 55 (quaternary ammonium surfactant), 5 % by weight Ethoquat C25 surfactant and 1.5 % by weight of an acetylenic diol surfactant, 2 % by weight nonanoic acid, 10.00 % compatibility agent and 31.50 % water. The formulation is a clear transparent liquid.

Several dry formulations were also prepared :

| Formulation N° | 9 | 10 | 11 | 12 | 13 | 14 | 15 |
|---|---|---|---|---|---|---|---|
| Na-glypho glypho a.e. | 47.73 42.24 | 63.10 55.84 | 73.26 64.84 | 50.17 44.40 | 78.41 69.39 | 75.68 68.98 | 80.26 71.03 |
| Surfactant | 13.40 | 15.76 | 12.82 | 16.39 | 15.15 | 17.58 | 14.20 |
| Nonanoic ac | 3.35 | 3.93 | 3.20 | 4.40 | 3.78 | 4.39 | 3.55 |
| Ammonium sulfate | 33.64 | 16.72 | 11.35 | 20.39 | 0.00 | 0.00 | 0.00 |
| Impurities | 1.18 | 1.52 | 1.76 | 6.85 | 1.94 | 1.34 | 1.31 |
| Na OH excess | 0.10 | -1.63 | -2.99 | 0.19 | 0.13 | 0.41 | 0.08 |
| Water | 0.60 | 0.60 | 0.60 | 2.00 | 0.60 | 0.60 | 0.60 |

For the above mentioned solid formulations, the sodium salt of glyphosate has been used. The surfactant consists of a blend of a polyalkoxylated quaternary ammonium surfactant and an ethoxylated sorbitan ester (80/20). Glyphosate acid, finely ground ammonium sulphate and surfactant were blended until a homogeneous mix was obtained. NaOH pellets were then added in order to convert the glyphosate acid into the sodium salt of glyphosate with the liberation of heat. The obtained dow was then extruded through a screen with holes of 1 mm diameter.

Alternatively, glyphosate acid, ammonium sulphate and NaOH may be blended with the addition of a small quantity of water. The reaction between NaOH and glyphosate acid is then fast and very exothermic. Surfactant may be added later to the dow which is afterwards dried to form an extrudable dow.

The following adjuvant intended to be added to current herbicidal glyphosate compositions has been prepared :

| | |
|---|---|
| * quaternary ammonium surfactant (EMCOL-CC5 from Witco) | 48.30 |
| * Ethoxylated sorbitan fatty acid ester (Tween-20 - from ICI) | 19.40 |
| * Nonanoic acid | 19.40 |
| * Lauric acid | 6.50 |
| * Myristic acid | 6.40 |
| TOTAL | 100.00 |

Example 1

Formulations No. $C_1$ and 1 to 4 have been tested with regard to the foaming ability.

Procedure :

A 2 % solution of the above formulations in tap water was inverted 10 times and foam height was measured in cm.

| FORMULATIONS | $C_1$ | 1 | 2 | 3 | 4 |
|---|---|---|---|---|---|
| Initially | 8.0 | 5.5 | 6.5 | 4.5 | 1.00 |
| After 1 min. | 3.0 | 2.0 | 4.0 | 3.0 | 0 |
| After 5 min. | 2.0 | 1.5 | 3.0 | 2.5 | 0 |
| After 10 min | 1.5 | 1.5 | 1.5 | 1.0 | 0 |

It appears clearly, that shortly after the 10 inversions, the foam height of the formulations according to the invention is lower compared to the control $C_1$ which does not contain fatty acid. In the later measurements, higher molecular fatty acids were better in controlling the foaming than lower fatty acids and the control.

Example 2

A green-house test of several formulations defined earlier has been carried out according to the following procedure :

Plants were grown from seed in 10 cm pots containing a natural sandy loam soil. The pots were placed in a growth-room until the spraying with a precise relative humidity as well as temperature control. After spraying plants were transferred to a greenhouse where light and temperature were also well controlled. Plants remained in this greenhouse for the remainder of the experiment. Both in growth-room and in the greenhouse, the water was supplied from below the pots by an automatic irrigation system.

Plants reached the appropriate growth stage for spraying around 3-4 weeks after sowing. Before spraying, pots were selected for uniformity as far as possible and atypical pots were discarded.

Glyphosate formulations were applied post-emergence with a Mardrive precision laboratory sprayer, calibrated to 200 l/ha spray solution in a single pass. All formulations were diluted with water. All replicate pots (3-5 pots per treatment) were sprayed with one pass of the sprayer.

Pots were distributed randomly in the growth room after treatment. Untreated control pots were placed at random among treated pots.

Assessment of per cent phytotoxicity was made by comparison with untreated control pots on an arbitrary scale from 0 to 100%, where 0 means no visible effect and 100 means death of all plants.

The results are summarized in the following table which gives an average calculated over the results obtained with three different rates, 360, 720 and 1080 g of glyphosate acid equivalent per hectare.

EP 0 577 914 A1

| FORMULATION | BRSNN 15 DAT | BRSNN 28 DAT |
|---|---|---|
| $C_1$ | 26 | 38 |
| 1 | 37 | 46 |
| 2 | 37 | 46 |
| 3 | 34 | 44 |
| 4 | 31 | 41 |
| $C_2$ | 8 | 15 |
| DAT : Days after treatment | | |

It appears from the above test results that by the addition of fatty acids in small amounts the herbicidal activity of glyphosate is improved against broadleaf weeds, BRSNN (Brassica napus) being a good representative of said type of weeds against which commercial glyphosate compositions are known to be less efficacious compared to narrowleaf weeds.

Example 3

Another green-house/growthroom test has been carried out according to the same procedure as described in example 2.

The results are given in the next table and are presented as average over three different rates, 360, 720 and 1080 g glyphosate acid equivalent per hectare.

| FORMULATION No | BRSNN | | GERMO 14 DAT | AGRRE 14 DAT | LOLRI 14 DAT |
|---|---|---|---|---|---|
| | 14 DAT | 40 | | | |
| $C_1$ | 55 | 42 | 66 | 21 | 76 |
| 1 | 70 | 55 | 63 | 37 | 99 |
| 2 | 68 | 61 | 69 | 31 | 98 |
| 3 | 59 | 47 | 60 | 33 | 94 |
| 8 | 66 | 54 | 61 | 47 | 100 |

It appears from the above table that the herbicidal activity of glyphosate is significantly improved on broadleaf weeds ( BRSNN, Brassica napus; GERMO - Geranium molle) as well as on narrowleaf weeds (AGRRE-Agropyron repens; LOLRI-Lolium), compared to control $C_1$. The best improvement is observed with nonanoic acid.

It has to be pointed out that in this test, the herbicidal activity has been assessed at 14 days after treatment and 40 days after treatment on BRSNN; the assessment at 14 days is not a final assessment, whilst the assessment at 40 days after treatment shows whether or not there is regrowth.

On GERMO, another broadleaf weed species, the improvement has not been observed at 14 days after treatment. This assessment, however, as previously mentioned, is not a final assessment.

In this test the improvement previously noticed especially on broadleaf weeds has also been observed on narrowleaf weeds, like AGRRE and LOLRI.

Example 4

Another greenhouse/growthroom test has been carried out according to essentially the same procedure as described in Example 2.

This test has been implemented in order to show the influence of each of the components of the exemplified compositions :

8

| COMPOSITION | glyphosate acid equivalent | surfactant blend | | nonanoic ac. | AMS |
|---|---|---|---|---|---|
| MON 4.1 | 360 | 144 | - | - | 288 |
| MON 4.2 | 360 | 115 | 29 | - | 288 |
| MON 4.3 | 360 | 92 | 23 | 30 | 288 |
| MON 4.4 | 360 | 114 | - | 30 | 288 |
| MON 4.5 | 360 | 144 | - | 30 | 288 |

MON 4.1 contains the glyphosate herbicide as the sodium salt of glyphosate, whilst MON 4.2, MON 4.3, MON 4.4 and MON 4.5 contain the glyphosate herbicide as the isopropylamine salt of glyphosate.

In all the above compositions, the surfactant is either a polyalkoxylated quaternary ammonium surfactant alone or a blend of said surfactant with polyethoxylated sorbitan ester.

AMS means ammonium sulphate.

The following table indicates the obtained results presented as averages over three different rates and over two assessments (10 DAT and 25 DAT).

| TREATMENT | BL BRSNN | BL GERMO | NL LOLRI | NL ELYRE |
|---|---|---|---|---|
| MON 4.1 | 67 | 86 | 65 | 39 |
| MON 4.2 | 68 | 84 | 73 | 48 |
| MON 4.3 | 75 | 83 | 70 | 57 |
| MON 4.4 | 70 | 85 | 70 | 55 |
| MON 4.5 | 69 | 77 | 71 | 47 |

MON 4.3 may be compared to MON 4.2, since part of the surfactant blend has been replaced by fatty acid. Overall, the fatty acid tends to enhance the herbicidal effect. MON 4.4 may be compared to MON 4.1 showing that the effect of fatty acid enhances the herbicidal effect of glyphosate more particularly on narrowleaf weeds. MON 4.5 may be compared to MON 4.1 as well where the addition of fatty acid further improves the effect of the composition, more particularly on grasses under the conditions of this test.

Example 5

The compositions 1 and 2 as well as 9 to 11 and 14 to 15 as defined hereabove have been tested in a field test carried out according to the following procedure :

The rates of application of this test were equivalent to 360, 720 and 1080 g a.e./ha.

Application was made at 250 litre/ha using standard field spraying equipment during September 1991.

The weather at the spraying was clear, temperature was around 15°C and no rain was recorded in the six hours following spraying.

Assessment was carried out as in the previous Examples. Randomized block design with 3 replicates was used (1 check per 5-6 treatment plots). Unit plot size : 1.5 X 3.5 m.

The results are presented as average of three replicates and over three different rates.

| COMPOSITION | LOLRI | | |
|---|---|---|---|
| | 14 DAT | 28 DAT | 48 DAT |
| C3 | 76 | 82 | 82 |
| 9 | 79 | 87 | 86 |
| 10 | 76 | 82 | 79 |
| 11 | 71 | 82 | 81 |
| 14 | 73 | 81 | 81 |
| 15 | 74 | 82 | 86 |
| 1 | 76 | 83 | 86 |
| 2 | 81 | 89 | 93 |
| C1 | 77 | 87 | 88 |

C3 is a control that does not contain fatty acid and consists of a formulated dry product corresponding to MON 4.1 as used in the previous example.

It appears that the solid formulated products show high activity level on grass weeds, whilst the liquid compositions proved to show enhanced activity on broadleaf weeds, also show good performance on grasses.

Example 6

The composition N°2 as defined above has been used in a field test in comparison to C1 on BRSNN.

The procedure is similar to that of example 5, except that the treatment has been carried out in April 1992, in Belgium.

The results are summarized in the following table.

| TREATMENT | B R S N N | | | |
|---|---|---|---|---|
| | g a.e./ha  DAT : 14 | 22 | 33 | 51 |
| 2 | 540 ai g/ha | 25.0 | 56.7 | 68.3 | 73.3 |
| | 900 ai g/ha | 36.7 | 73.3 | 83.3 | 87.7 |
| | 1 260 ai g/ha | 45.0 | 76.7 | 90.0 | 96.7 |
| C1 | 540 ae g/ha | 23.3 | 51.7 | 56.7 | 61.7 |
| | 900 ae g/ha | 36.7 | 71.7 | 78.3 | 80.0 |
| | 1 260 ae g/ha | 43.3 | 75.0 | 88.3 | 90.0 |

Claims

1. A glyphosate composition comprising :
   - a glyphosate herbicide
   - a surfactant component in the weight ratio of glyphosate to surfactant of from 1:5 and 10:5, and

10

- a monocarboxylic fatty acid selected from saturated C8-C14 monocarboxylic fatty acids or salts thereof, in the weight ratio of glyphosate herbicide to fatty acid of from 30/1 to 10/1.

2. Glyphosate composition according to Claim 1 characterized in that the saturated monocarboxylic acid is nonanoic, decanoic or lauric acid.

3. Glyphosate composition according to any of Claims 1 or 2 characterized in that the surfactant component consists of :
   - amine, such as ethoxylated alkyl amine, particularly tallow amine, cocoamine, surfactants sold under the tradename Ethomeen, or Ethoduomeen, amine oxide, such as surfactants sold under the trade name Empigen OB;
   - quaternary ammonium salt, such as ethoxylated and/or propoxylated quaternary ammonium salt, more particularly surfactants sold under the trade names Ethoquad, Emcol CC, Dodigen; quaternary ammonium salt as disclosed in British Patent Application 90 02495.1;
   - alkylpolyglycoside or alkylglycoside, glucose or sucrose ester, like surfactants from the Crodesta F series; sucroglyceride;
   - phosphate ester type of surfactant;
   - sulfosuccinate type of surfactant,
   - ethylenoxyde-propylenoxyde block co-polymer surfactants; sorbitan fatty acid ester, possibly ethoxylated and/or propoxylated;
   - silicon polymer type of surfactant;
   - acetylenic diol type of surfactant; or
   mixtures thereof.

4. Glyphosate composition according to any of Claims 1 to 3 in which the glyphosate is present as the isopropylamine salt.

5. Glyphosate composition according to any of Claims 1 to 3 in which the glyphosate is present as the trimethylsulfonium salt or as the sulfonylamine salt.

6. Glyphosate composition according to any of Claims 1 to 5 which is a liquid concentrate containing at least 100 g/l of glyphosate expressed as glyphosate acid equivalent.

7. Glyphosate composition according to any of Claims 1 to 3 in which the glyphosate is present as an alkali metal, alkali-earth metal or ammonium salt or as a mixture of said salts.

8. Glyphosate composition according to Claim 7 which is a solid composition.

9. Glyphosate composition according to Claim 8 which includes a water-soluble support, preferably an inorganic ammonium salt more preferably ammonium nitrate, thiocyanate, phosphate, chloride or sulphate.

10. Glyphosate composition according to any of Claims 1 to 4 which is a spray solution having a concentration such that when sprayed at 200-600 L/ha, 0.125 to 3 kg of glyphosate (expressed as glyphosate acid equivalents) per hectare is applied.

11. Glyphosate composition according to any of the preceding claims, characterized in that it further comprises a low amount of a C16 - C30 monocarboxylic saturated acid.

12. A method of controlling unwanted plants which comprises applying a composition according to any of Claims 1-11 at a rate of from 0.125 to 3 kg glyphosate acid equivalent per hectare.

13. An adjuvant for agricultural composition characterized in that it comprises a surfactant component and a saturated monocarboxylic C8-C18 fatty acid, preferably in the weight ratio of from 90/10 to 10/90 and possibly a C16 to C30 saturated monocarboxylic acid.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | WO-A-9 207 467 (SAFER)<br><br>* page 1, paragraph 1 *<br>* page 4, paragraph 1 - page 11, paragraph 4 *<br>* claims 1,6,10 * | 1-7, 10-13 | A01N57/20<br>A01N25/30<br>//(A01N57/20,<br>37:02, 25:30,<br>25:14, 25:06,<br>25:02) |
| Y | --- | 8,9 | |
| Y | EP-A-0 378 985 (MONSANTO)<br>* page 3, line 28 - line 44 *<br>* page 5, line 36 - line 44 *<br>--- | 8,9 | |
| X | STN International, File CABA,<br>STN accession no. 91:10805,<br>D.G.SHILLING et al.:'Influence of surfactants and additives on phytotoxicity of glyphosate to torpedograss.'<br>& JOURNAL OF AQUATIC PLANT MANAGEMENT<br>vol. 28, 1990,<br>pages 23 - 27<br>--- | 1-13 | |
| X | STN International, File CABA,<br>STN accession no.:90:134023, A.J.WELLS:<br>'Adjuvants, glyphosate efficacy and post-spraying rainfall.'<br>& PLANT PROTECTION QUARTERLY<br>vol. 4, no. 4, 1989,<br>pages 158 - 164<br>--- | 1-13 | **TECHNICAL FIELDS SEARCHED (Int. Cl.5 )**<br><br>A01N |
| X | WO-A-7 900 838 (M.J.SAMPSON)<br>* page 1, line 1 - line 17 *<br>* page 2, line 7 - line 23 *<br>* page 3, line 17 - line 22 *<br>* page 7, line 3 - line 7 *<br>* page 7, line 27 *<br>* claims 1,2 * | 1-13 | |
| D | & US-A-4 436 547<br>--- | | |
| | -/-- | | |

The present search report has been drawn up for all claims

| Place of search | Date of completion of the search | Examiner |
|---|---|---|
| THE HAGUE | 10 FEBRUARY 1993 | LAMERS W. |

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | DATABASE WPIL<br>Week 8448,<br>Derwent Publications Ltd., London, GB;<br>AN 85-298765<br>& JP-A-60 204 701 (TOHO CHEM IND) 16 October 1985<br>* abstract * | 13 | |
| X | DATABASE WPIL<br>Week 8721,<br>Derwent Publications Ltd., London, GB;<br>& JP-A-62 084 003 (MITSUBISHI PETROCH) 17 April 1987<br>* abstract * | 13 | |
| D,X | WO-A-9 105 471 (SAFER)<br>* page 6, line 3 - page 8, line 9 * | 13 | |
| X | GB-A-2 203 339 (CIBA-GEIGY)<br>* page 1, paragraph 2 -paragraph 3 *<br>* page 5, paragraph 4 -paragraph 5 *<br>* claims 1,2,11 * | 13 | TECHNICAL FIELDS SEARCHED (Int. Cl.5 ) |
| E | WO-A-9 211 764 (MONSANTO)<br>23 July 1992<br>* claims 1,9,11 * | 1-13 | |
| E | EP-A-0 494 386 (MYCOGEN)<br>15 July 1992<br>* page 2, line 36 - page 3, line 17 *<br>* page 3, line 56 - line 58 *<br>* page 4; example 1 *<br>* claims 1,6,7,13 * | 1-13 | |
| A | FR-A-2 589 328 (STAUFFER CHEMICAL)<br>* page 1, line 4 - line 6 *<br>* page 2, line 10 - line 36 *<br>* page 3, line 18 - line 23 * | 1-13 | |

-/--

The present search report has been drawn up for all claims

| Place of search | Date of completion of the search | Examiner |
|---|---|---|
| THE HAGUE | 10 FEBRUARY 1993 | LAMERS W. |

European Patent
Office

EUROPEAN SEARCH REPORT

Application Number

EP    92 87 0100
Page 3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| A | CHEMICAL PATENTS INDEX, BASIC ABSTRACTS JOURNAL<br>Section Ch, Week 8627, 27 August 1986<br>Derwent Publications Ltd., London, GB;<br>Class C, AN 86-173305/27<br>& JP-A-61 106 501 (TEIJIN) 24 May 1986<br>* abstract * | 1-13 | |
| A | WO-A-9 206 596 (CHEVRON RESEARCH AND TECHNOLOGY)<br>* page 2, line 9 - line 18 *<br>* page 3, line 9-11 *<br>* page 4, line 7 - line 12 *<br>* page 7, line 16 - line 18 *<br>* page 8, line 3 * | 1-13 | |
| A | CHEMICAL PATENTS INDEX, BASIC ABSTRACTS JOURNAL<br>Section Ch, Week 8705, 1 April 1987<br>Derwent Publications Ltd., London, GB;<br>Class C, AN 87-032875/05<br>& JP-A-61 289 004 (KAO) 19 December  1986<br>* abstract * | 1-13 | |
| D,A | WO-A-8 903 178 (SAFER)<br>* the whole document * | 1-13 | TECHNICAL FIELDS<br>SEARCHED (Int. Cl.5) |
| A | US-A-4 834 908 (J.L.HAZEN ET AL.)<br>* column 1, line 58 - column 2, line 6 *<br>* column 3, line 21 - line 34 * | 1-13 | |

The present search report has been drawn up for all claims

| Place of search | Date of completion of the search | Examiner |
|---|---|---|
| THE HAGUE | 10 FEBRUARY 1993 | LAMERS W. |

EPO FORM 1503 03.82 (P0401)